# EUROPÄISCHE PATENTSCHRIFT

(11) **EP 1 154 258 B1**
(45) Veröffentlichungstag und Bekanntmachung des Hinweises auf die Patenterteilung: **24.01.2007**
(21) Anmeldenummer: 01111091.3
(22) Anmeldetag: 09.05.2001
(51) Int. Cl.: G01N 21/35

(54) **Verfahren und Vorrichtung zur Verbrennungslosen Bestimmung des Brennwertes oder der Wobbezahl eines Erdgases**
Method and apparatus for combustionless determination of the calorific value or Wobbe index of natural gas
Procédé et dispositif pour la détermination sans combustion de la valeur calorifique de gaz naturel

(30) Priorität: 13.05.2000 DE 10023635
(43) Veröffentlichungstag der Anmeldung: 14.11.2001
(73) Patentinhaber: E.ON Ruhrgas AG, 45138 Essen (DE)
(72) Erfinder: Hoppe, Manfred, 46284 Dorsten (DE); Kröner, Heinz, 44627 Herne (DE); Wolf, Dieter, 46286 Dorsten (DE)
(74) Vertreter: Harlacher, Mechthild

(56) Entgegenhaltungen:
- EP-A- 0 882 977
- DE-A- 19 650 302
- DE-A- 19 838 301
- DE-C- 19 830 720
- US-A- 3 950 101
- US-A- 4 594 510
- US-A- 5 822 058

## Beschreibung

Die vorliegende Erfindung betrifft ein Verfahren zur verbrennungslosen Bestimmung des Brennwertes oder der Wobbezahl eines Erdgases
a) wobei zumindest ein Teil des Erdgases einer Infrarotstrahlung ausgesetzt wird,
b) wobei jeweils der von dem Erdgas absorbierte Anteil der Infrarotstrahlung erfasst wird,
c) wobei aus den wenigstens zwei Werten für den von dem Erdgas absorbierten Anteil der Brennwert oder die Wobbezahl bestimmt wird,
d) wobei den Verfahrensschritten a) bis c) mehrere Messzyklen vorgeschaltet werden, bei denen die Schritte a) und b) mit mehreren Referenzgasen bekannten Brennwerts oder bekannter Wobbezahl durchgeführt werden; dass aus dem Verhältnis der bei den Referenzgasen erfassten Referenzwerte eine der Zahl der Messzyklen entsprechende Zahl von Referenzwertmustern in Zuordnung zu den bekannten Brennwerten oder Wobbezahlen gespeichert wird; und dass die Messwerte aus einem späteren Messzyklus an Erdgas unbekannten Brennwertes oder unbekannter Wobbezahl mit den Referenzwertmustern zur Zuordnung eines bestimmten Brennwertes oder einer bestimmten Wobbezahl verglichen werden.

Ferner betrifft die vorliegende Erfindung eine Vorrichtung zur verbrennungslosen Bestimmung des Brennwertes oder der Wobbezahl eines Erdgases, mit einer an eine das Erdgas führende Gasleitung anschließbaren Sensoranordnung und eine mit der Sensoranordnung gekoppelten Auswerteeinheit zur Bestimmung des Brennwertes oder der Wobbezahl wobei die Sensoranordnung eine Strahlungsquelle für Infrarotstrahlung und der Strahlungsquelle zugeordnete Mittel zur Erfassung des von dem Erdgas absorbierten Anteils der Infrarotstrahlung aufweist.

Die bekannten kalorimetrischen Verfahren, bei denen eine kontrollierte Teilstromverbrennung des übertragenen Gasstroms durchgeführt wird, erfordern eine aufwendige Bauweise und stellen besondere Anforderungen an die Aufstellungsumgebung. Versuche, kalorimetrische Verfahren mit katalytischer Verbrennung einzuführen, waren bisher nicht erfolgreich, hauptsächlich wegen mangelnder Langzeitstabilität und zu geringen Auflösungsvermögens für Erdgase. Die verbrennungslosen Verfahren zur Messung des Brennwertes und der Wobbezahl ermöglichen je nach dem gewählten Ansatz eine einfachere, kostengünstigere und kompaktere Realisierung der Messung.

Zu den verbrennungslosen Messverfahren gehören indirekte und korrelative Verfahren. Bei den indirekten Verfahren wird die Gaszusammensetzung analysiert. Aus der Zusammensetzung des Gases kann dann mit den Brennwerten für die reinen Stoffe der Brennwert des Erdgases bestimmt werden. Diese Verfahren (z. B. die Gaschromatographie) liefern sehr genaue Ergebnisse, sind aber technisch kompliziert und daher z. B. für den Einsatz in der Industrie nur sehr bedingt und für den Einsatz in Haushalten nicht geeignet. Zudem sind sie störanfällig.

Bei den korrelativen Verfahren zur Messung des Brennwertes bzw. der Wobbezahl wird ein Zusammenhang zwischen einer leicht messbaren physikalischen oder chemischen Messgröße und dem Brennwert ausgenutzt. Die technische Durchführung ist hierbei in der Regel einfacher, jedoch können die Eindeutigkeit und die Genauigkeit der Messung des Brennwertes bzw. der Wobbezahl durch ungünstige Wahl der Messgrößen in unerwünschtem Maße eingeschränkt werden.

Aus der EP 0 882 977 A1 ist ein Verfahren zur verbrennungslosen Bestimmung des Brennwertes oder der Wobbezahl eines Erdgases bekannt. Bei diesem bekannten Messverfahren werden charakteristische Stellen im Spektrum für Kohlenwasserstoffe ausgewertet. Dieses Verfahren bedingt eine relativ schmale spektrale Bereiche von 10 bis 20 nm. Drei Messungen werden benötigt von denen zwei Messungen bei Wellenlängen oder spektrale Bereiche durchgeführt werden, die signifikante Messwerte für Methan liefern. Eine weitere Messung wird bei einer Wellenlänge durchgeführt, die signifikante Messwerte für andere Alkane liefert. Die spektralen Messwerte werden aufsummiert.

Aus der DE 198 38 301 A1 ist ein Verfahren zur optischen Bestimmung des Brennwertes einer Gasprobe durch Transmissionsmessungen bei unterschiedlichen Wellenlängen im Infrarotbereich bekannt. Mittels einer Strahlungsquelle wird eine breitbandige Messstrahlung erzeugt. Mittels eines dispersiven Elements in Form eines Prismas wird die Infrarotstrahlung räumlich aufgespalten. Es werden Messungen im Spektralbereich der C-H Schwingungen, insbesondere im Bereich zwischen 3µm und 4 µm, alternativ im Bereich zwischen 1,5µm und 2µm durchgeführt. Eine Vielzahl von spektralen Messwerten sind über das Absorptionsspektrum verteilt und werden aufsummiert.

Bei der US 5,822,058 wird eine breitbandige Messstrahlung im nah infraroten Bereich von 900 nm (0,9 µm) bzw.von 700 nm bis 1.000 nm (0,7 µm bis 1,0 µm) erzeugt. Die Messstrahlung wird dispersiv verlegt. Die spektralen Messwerte, die über das Absorptionsspektrum verteilt sind, werden aufsummiert.

Aus der US 4,594,510 ist ein Verfahren zur optischen Bestimmung des Brennwertes einer Erdgasprobe bekannt, bei dem eine breitbandige Messstrahlung im Bereich von 3,0 bis 3,5 micons (3.000 nm bis 3.500 nm bzw. 3,0 µm bis 3,5 µm) erzeugt wird. Die Messstrahlung wird mittels eines dispersiven Elements (Fig. 4 A) zerlegt und die Absorption bei mehreren Wellenlängen, und zwar so viele wie brennbare Komponenten, gemessen. Die spektralen Messwerte werden aufsummiert.

Alle bekannten Verfahren zur optischen Bestimmung des Brennwertes sind relativ aufwändig, um die erforderliche Genauigkeit und Zuverlässigkeit zu gewährleisten.

Aufgabe der Erfindung ist es, ein zuverlässiges,genaues und einfaches Verfahren und eine entsprechende Vorrichtung zur korrelativen verbrennungslosen Messung des Brennwertes bzw. zur Bestimmung der Wobbezahl zur Verfügung zu stellen, die mit einem kompakten und einfach zu installierenden Messgerät realisiert werden können.

Gelöst wird diese Aufgabe erfindungsgemäß dadurch, dass bei dem eingangs genannten Verfahren der von dem Erdgas absorbierte Anteil für zwei Wellenlängen oder spektrale Bereiche erfasst wird, dass die beiden Wellenlängen oder spektralen Bereiche derart ausgewählt werden, dass sich die Anteile einzelner Komponenten des Erdgases in unterschiedlicher Gewichtung auf die erfassten absorbierten Anteile auswirken, wobei eine Wellenlänge 7,9 µm und eine andere wellenlänge 3,4 µ beträgt.

Es hat sich gezeigt, dass aus den Absorptionsmesswerten des Erdgases für nur zwei Wellenlängen oder spektrale Bereiche der Brennwert oder die Wobbezahl des Erdgases zuverlässig bestimmt werden kann. Wichtig dabei ist lediglich, dass die beiden ausgewählten spektralen Bereiche bzw. Wellenlängen keine redundanten, sondern deutlich differierende Informationen über das Erdgas liefern. Der Grund dafür, dass bereits zwei Absorptionsmesswerten zur zuverlässigen Bestimmung des Brennwertes oder der Wobbezahl genügen, ist offenbar, dass die Zusammensetzung von Erdgasen bestimmten, durch die natürliche Entstehung bedingten Gesetzmäßigkeiten unterliegt.

Dem erfindungsgemäßen Verfahren gelingt es offensichtlich, diese Gesetzmäßigkeiten zu nutzen.

Der absorbierte Anteil der Infrarotstrahlung kann zuverlässig und mit hoher Genauigkeit erfasst werden. Zur Realisierung des erfindungsgemäßen Verfahrens genügen bereits eine Infrarotstrahlungsquelle, zwei Infrarotsensoren und eine Auswerteeinheit. Der technische Aufwand und die Kosten für die Durchführung des Verfahrens sind dementsprechend gering. Außerdem ist der Platzbedarf zur Durchführung des Verfahrens sehr gering, da sich die Infrarotstrahlungsquelle und die Strahlungsdetektoren problemlos in ein kompaktes Messgerät integrieren lassen. Besonders bewährt hat sich das Verfahren im Anwendungsbereich der industriellen Prozessregelung.

Folglich können die jeweils erforderlichen zwei Messungen ohne großen technischen Aufwand, zuverlässig und genau durchgeführt werden, so dass die Verknüpfung der Messwerte entsprechende Ergebnisse für den Brennwert bzw. die Wobbezahl liefert. Der so ermittelte Brennwert kann z. B. zur Steuerung von Verbrennungsprozessen verwendet werden.

Den jeweiligen Verfahrensschritten a) bis c) werden mehrere Messzyklen vorgeschaltet, bei denen die Schritte a) und b) mit mehreren Referenzgasen durchgeführt werden, um eine geeigneten Korrelation zwischen den gemessenen Absorptionswerten und dem Brennwert bzw. der Wobbezahl aufzufinden. An dem Referenzgas werden dann die für die verschiedenen Varianten des Verfahrens benötigten Messgrößen erfasst. In diesen Referenzzyklen wird aus dem Verhältnis der erfassten Referenzwerte eine der Zahl der Messzyklen entsprechende Zahl von Referenzwertmustern in Zuordnung zu den bekannten Brennwerten oder Wobbezahlen gespeichert. Die Messwerte aus einem späteren Messzyklus an Erdgas mit unbekanntem Brennwert oder unbekannter Wobbezahl werden dann mit den Referenzwertmustern zur Zuordnung eines bestimmten Brennwertes oder einer bestimmten Wobbezahl verglichen.

Zur Erhöhung der Referenzgenauigkeit sollte eine Vielzahl von Referenzzyklen durchgeführt werden, in denen nacheinander die verschiedenen Einflussgrößen, z. B. Zusammensetzung, Druck und Temperatur, über den zu erwartenden Bereich variiert werden. Eine eindeutige und genaue Zuordnung eines bestimmten Brennwertes bzw. einer bestimmten Wobbezahl zu einem in einem Messzyklus erfassten Messwertmuster eines Erdgases wird durch Interpolation der verschiedenen Referenzsignalmuster erzielt.

Ein wesentlicher Vorteil des erfindungsgemäßen Verfahrens besteht darin, dass die Korrelation zwischen Brennwert bzw. Wobbezahl und den erfassten Messgrößen mit Hilfe einer beliebigen Anzahl von Referenzzyklen für eine spezielle Anwendung nur einmal aufgefunden werden muss. Der einmalige Aufwand ist verhältnismäßig gering. Die Referenzbedingungen sollten hierbei möglichst getreu den später zu erwartenden Messbedingungen gewählt werden. Es sollten also für alle Messgrößen nur die tatsächlich in Frage kommenden Messbereiche mit einer ausreichenden Genauigkeit als Referenzwertmuster erfasst werden.

Der Brennwert oder die Wobbezahl können dadurch noch genauer bestimmt werden, dass außerdem der von dem Erdgas absorbierte Anteil der Infrarotstrahlung für eine weitere Wellenlänge im Bereich von 3,2 µm bis 3,5 µm erfasst wird.

Der Brennwert oder die Wobbezahl des Erdgases können dadurch noch genauer bestimmt werden, dass der von dem Erdgas absorbierte Anteil der Infrarotstrahlung bei Normbedingungen erfasst wird oder dass die von dem Erdgas absorbierten Anteile der Infrarotstrahlung temperaturkompensiert und/oder druckkompensiert der Bestimmung des Brennwertes zugrundegelegt werden.

Schließlich kann die Genauigkeit dadurch noch weiter erhöht werden, dass im Schritt b) zusätzlich wenigstens eine der Messgrößen Druck, Temperatur und Kohlenstoffdioxidanteil erfasst wird.

Die erfindungsgemäße Aufgabe wird ferner gelöst durch eine Vorrichtung der eingangs genannten Art mit einer an eine das Erdgas führende Gasleitung anschließbaren Sensoranordnung und einer mit der Sensoranordnung gekoppelten Auswerteeinheit zur Bestimmung des Brennwertes oder der Wobbezahl, bei der die Sensoranordnung eine Strahlungsquelle für Infrarotstrahlung und der Strahlungsquelle zugeordnete Mittel zur Erfassung des von dem Erdgas absorbierten Anteils der Infrarotstrahlung aufweist, wobei, die Mittel den von dem Erdgas absorbierten Anteil für zwei Wellenlängen oder spektrale Bereiche erfassen, die beiden Wellenlängen oder spektralen Bereiche derart ausgewählt sind, dass sich die Anteile einzelner Komponenten des Erdgases in unterschiedlicher Gewichtigkeit auf die erfassten absorbierten Anteile auswirken,wobei ein Mittel derart ausgebildet ist, dass es den absorbierten Anteil der Infrarotstrahlung für die Wellenlagen 7,9 µm und 3,4 µm erfasst.

Die erfindungsgemäße Vorrichtung ermöglicht nicht nur eine genaue und zuverlässige Bestimmung des Brennwertes bzw. der Wobbezahl, sondern hat wie das erfindungsgemäße Verfahren den Vorteil, dass sie äußerst kompakt realisiert werden kann. Zudem sind die Herstellungskosten gering.

Vorzugsweise weisen die Mittel zur Erfassung des absorbierten Anteils der Infrarotstrahlung einen optischen Vergleichskanal auf, der die Infrarotstrahlung in einem Wellenlängenbereich erfasst, in welchem die Erdgaskomponenten keine IR-Strahlung absorbieren. Auf diese Weise kann die Infrarotstrahlungsquelle kontinuierlich überwacht werden. Veränderungen des Vergleichssignals können entweder rechnerisch kompensiert oder durch Neuausrichtung oder Austausch der Strahlungsquelle berücksichtigt werden.

Eine Weiterbildung der Erfindung ist dadurch gekennzeichnet, dass die Strahlungsquelle und die Mittel zur Erfassung des absorbierten Anteils aufeinander ausgerichtet sind, und dass sich zwischen diesen eine Messkammer mit dem zu bestimmenden Erdgas befindet.

Ein bevorzugtes Ausführungsbeispiel ist dadurch gekennzeichnet, dass die Messkammer über einen Stichkanal an die Gasleitung anschließbar ist, und dass zwischen Gasleitung und Messkammer ein Gasfilter angeordnet ist. Auf diese Weise wird die Messkammer einem ständigen Gasaustausch ausgesetzt. Ein separates Probenentnahmesystem ist nicht erforderlich. Dies ermöglicht einen besonders kompakten Aufbau. Ferner gelingt es mit Hilfe des Gasfilters, beispielsweise einer Metallfritte, größere Partikel und insbesondere Verschmutzungen von der Messkammer fernzuhalten.

Vorteilhafterweise weist der zu der Messkammer führende Stichkanal einen Zuströmkanal sowie einen Abströmkanal auf, und die Stichleitung ist derart an die Gasleitung anschließbar, dass der Zuströmkanal am stromauf gelegenen Ende in den Strömungsquerschnitt der Gasleitung hineinragt. Durch den sich am stromauf gelegenen Ende des Zuströmkanals einstellenden Staudruck wird eine Druckdifferenz erzeugt, die das Erdgas in Richtung auf die Messkammer fließen lässt. Dort wird das Erdgas in den Abströmkanal umgelenkt. In Folge dieser Strömungsführung wird der Transport des Erdgases beschleunigt und die Zeit innerhalb der eine Änderung des Brennwertes bzw. der Wobbezahl erkannt werden kann, reduziert. Weitere vorteilhafte Ausführungsformen sind in den Unteransprüchen gekennzeichnet.

Im folgenden wird die Erfindung anhand eines in der Zeichnung dargestellten Ausführungsbeispiel näher erläutert.

In der Zeichnung zeigen:
Figur 1 eine teilweise geschnittene Ansicht einer Vorrichtung zur Bestimmung des Brennwertes und/oder der Wobbezahl;
Figur 2 die Absorptionsbanden der Gase Methan, Ethan, Propan, Butan für den Wellenlängenbereich von 2,5 µm bis 20,0 µm;
Figur 3 ein Schema der Auswerteprozedur.

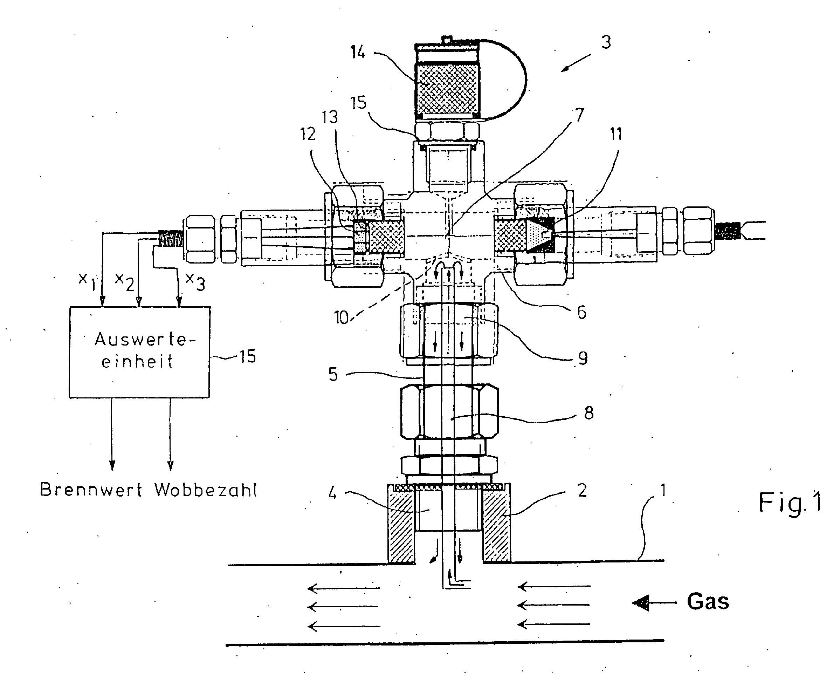

Figur 1 zeigt eine teilweise geschnittene Ansicht einer Vorrichtung zur Bestimmung des Brennwertes und/oder der Wobbezahl. Eine Erdgas führende Gasleitung 1 ist über eine angeschweißte Muffe 2 mit einer Sensoranordnung 3 verbunden. Die Sensoranordnung 3 ist hierzu mit einem Schraubansatz 4 versehen, der in ein Gewinde der Muffe 2 eingeschraubt ist. Von dem Schraubansatz 4 der Sensoranordnung 3 führt ein Stichkanal 5 zu einer in einem Gehäuse 6 angeordneten Messkammer 7. Der Stichkanal 5 besteht aus einem inneren Kanal, der als Zuströmkanal 8 dient, und einem diesen umgebenden äußeren Kanal, der als Abströmkanal 9 dient. Der Zuströmkanal 8 ragt an seinem stromauf gelegenen Ende in den Strömungsquerschnitt der Gasleitung 1 hinein.Zwischen der Messkammer einerseits und dem Zu- und Abströmkanal andererseits ist eine als Gasfilter dienende Kunststofffritte 11 angeordnet.Das Erdgas gelangt ausschließlich in Folge von Diffusion durch die Kunststofffritte 11 hindurch in die dahintergelegene, nach außen vollständig abgedichtete Messkammer 7. Die Messkammer 7 ist zentral innerhalb des Gehäuses 6 der Sensoranordnung 3 angeordnet.
Von einander gegenüberliegenden Seiten aus sind eine Infrarotstrahlungsquelle 11 und Infrarotdetektoren 12 mit vorgeschalteten Filtern 13 in das Gehäuse 6 eingeschraubt. In dem dargestellten Ausführungsbeispiel sind übereinander drei Filter 13 vorgesehen und diesen nachgeschaltet drei (nicht einzeln dargestellte) Infrarotdetektoren 12. Die Infrarotstrahlungsquelle 11 und die Infrarotdetektoren 12 mit den zugeordneten Filtern 13 sind derart zueinander ausgerichtet, dass sich auf ihrer Verbindungsachse das Zentrum der Messkammer 7 befindet.
Auf der dem stromab gelegenen Ende des Zuströmkanals 8 gegenüberliegenden Seite des Gehäuses 6 ist eine mit einer Verschlusskappe 14 versehene Öffnung 15 vorgesehen. Über die Öffnung 15 kann ein Referenzgas in die Messkammer 7 eingelassen werden. Die Infrarotdetektoren 12 sind mit einer Auswerteeinheit 15 verbunden. In dieser wird auf der Basis der von der Sensoranordnung 3 gelieferten Messwerte der Brennwert und/oder die Wobbezahl bestimmt.

Bei der Durchführung der Messung gibt die Strahlungsquelle 11 eine gerichtete Infrarotstrahlung in Richtung der Messkammer 7 ab. Das in der Messkammer 7 enthaltene Erdgas absorbiert einen Teil der Strahlung. Die nicht absorbierte Strahlung wird von den drei Infrarotfiltern 13 gefiltert, wobei diese jeweils einen anderen spektralen Bereich der Infrarotstrahlung durchlassen. Die von den Filtern 13 durchgelassenen Anteile der nicht vom Erdgas absorbierten Infrarotstrahlung werden von den zugehörigen drei Infrarotdetektoren 12 erfasst und an die Auswerteeinheit 15 ausgegeben, die diese Messwerte verarbeitet.

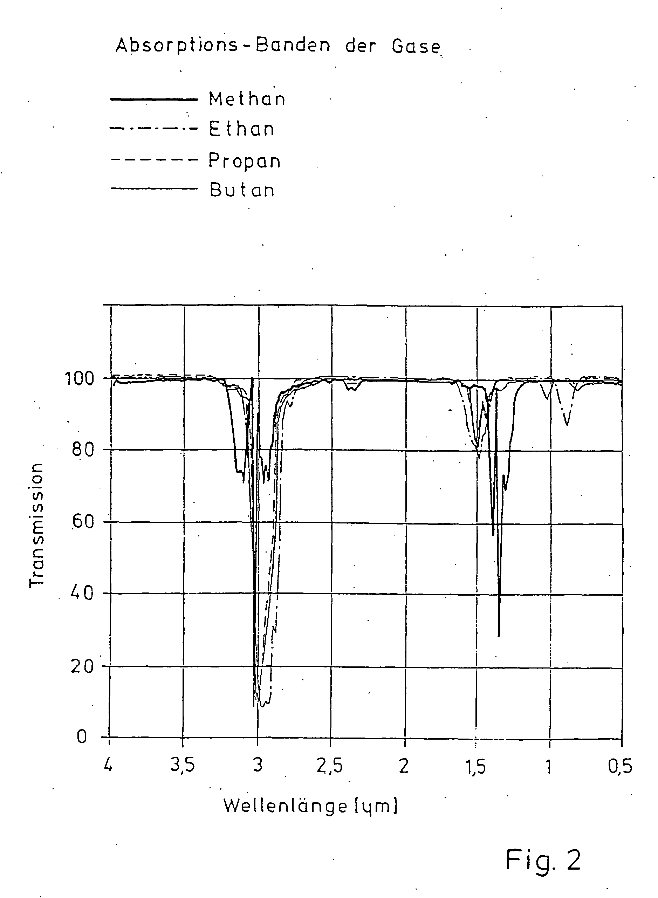

In Figur 2 sind die Absorptionsbande der Gase Methan, Ethan, Propan und Butan dargestellt. Ihr Transmissionsgrad ist in dem Diagramm gegen die Wellenlänge aufgetragen. In dem in Figur 1 dargestellten Ausführungsbeispiel sind die Filter 13 derart gewählt, dass das erste Filter lediglich Infrarotstrahlung von ca. 3,5 µm durchlässt. Das zugehörige Messsignal X₁ wird von dem Einfluss von Ethan, Propan, Butan gegenüber demjenigen Einfluss von Methan dominiert. Das zweite Filter lässt lediglich Infrarotstrahlung einer Wellenlänge von ca. 8 µm passieren. Somit hat das zugehörige zweite Messsignal X₂ eine hohe Empfindlichkeit in Bezug auf Methan. Daher wirken sich die Anteile der in Figur 2 dargestellten Komponenten des Erdgase stark unterschiedlich gewichtet auf die erfassten Messsignale X₁ und X₂ aus und ermöglichen bereits ohne ein weiteres Messsignal X₃ eine zuverlässige und genaue Bestimmung des Brennwertes bzw. der Wobbezahl.

In dem in Figur 1 dargestellten Ausführungsbeispiel ist ein drittes Filter 13 vorgesehen, das lediglich Infrarotstrahlung der Wellenlänge 3,3 µm passieren lässt. Der nachgeschaltete Infrarotdetektor 12 liefert ein drittes Messsignal X₃, auf welches sich die Anteile der in Figur 2 dargestellten Komponenten des Erdgases wiederum in unterschiedlicher Gewichtung zu den Messsignalen X₁ und X₂ auswirken.

Auf der Basis dieser drei Messsignale bzw. Messwerte X₁ bis X₃ berechnet die Auswerteeinheit 15 den Brennwert bzw. die Wobbezahl mit hoher Genauigkeit und Zuverlässigkeit.

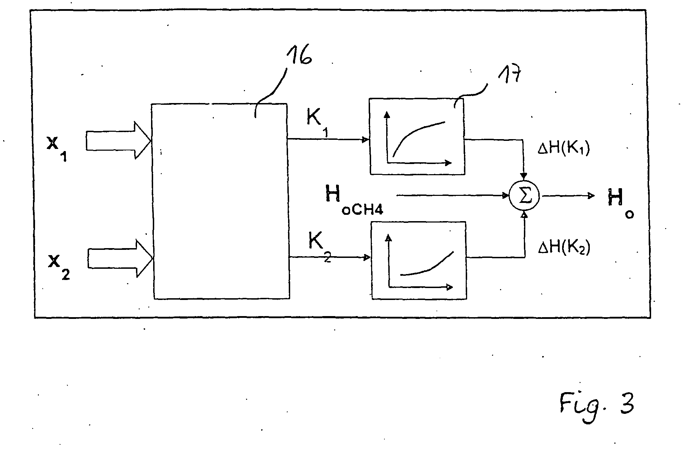

Figur 3 zeigt ein Schema der Auswerteprozedur. Die Messsignale X₁ und X₂ werden in einer Signalaufbereitungseinheit 16 analysiert: Aus den Messsignal-Paaren X₁ und X₂ werden im Rahmen der Analyse Wertebereiche gebildet, die bestimmten Gasarten zugeordnet werden können. Ausserdem werden die Messsignale, unter Ausnutzung der vorstehend genannten Referenzmuster, in transformierte Messsignal-Paare umgerechnet, welche das interne Brennwert/Wobbezahlverhalten dieses Erdgases abbilden.

In einem weiteren Schritt werden aus den transformierten Messsignal-Paaren über vorzugsweise nichtlineare Kennlinien 17 die einzelnen Brennwert/Wobbezahlanteile berechnet. Diese ergeben in der Summe den Brennwert und/oder die Wobbezahl des Erdgases.

Im Rahmen der Erfindung sind zahlreiche Abwandlungen möglich. Insbesondere können die untersuchten Wellenlängen bzw. spektralen Bereiche je nach Anwendungsfall beliebig ausgewählt werden. Statt den einzelnen Infrarotdetektoren jeweils Filter für die verschiedenen Wellenlängen oder spektralen Bereiche vorzuschalten, können selbstverständlich auch Infrarotdetektoren verwendet werden, die Infrarotstrahlung jeweils nur in einem bestimmten spektralen Bereich detektieren. Schließlich kann statt einer direkten Verbindung zwischen Gasleitung und Messkammer auch ein separates Probenentnahmesystem vorgesehen werden.

## Patentansprüche

1. Verfahren zur verbrennungslosen Bestimmung des Brennwertes oder der Wobbezahl eines Erdgases, wobei
a) zumindest ein Teil des Erdgases einer Infrarotstrahlung ausgesetzt wird,
b) der von dem Erdgas absorbierte Anteil der Infrarotstrahlung erfasst wird,
c) aus den Werten für den von dem Erdgas absorbierten Anteil der Brennwert oder die Wobbezahl bestimmt wird
d) den Verfahrensschritten a) bis c) mehrere Messzyklen vorgeschaltet werden, bei denen die Schritte a) und b) mit mehreren Referenzgasen bekannten Brennwerts oder bekannter Wobbezahl durchgeführt werden; wobei aus dem Verhältnis der bei den Referenzgasen erfassten Referenzwerte eine der Zahl der Messzyklen entsprechende Zahl von Referenzwertmustern in Zuordnung zu den bekannten Brennwerten oder Wobbezahlen gespeichert wird; und wobei die Messwerte aus einem späteren Messzyklus an Erdgas unbekannten Brennwertes oder unbekannter Wobbezahl mit den Referenzwertmustern zur Zuordnung eines bestimmten Brennwertes oder einer bestimmten Wobbezahl verglichen werden,
wobei
der von dem Erdgas absorbierte Anteil für zwei Wellenlängen oder spektrale Bereiche erfasst wird, und die beiden Wellenlängen oder spektralen Bereiche derart ausgewählt werden, dass sich die Anteile einzelner Komponenten des Erdgases in unterschiedlicher Gewichtung auf die andere erfassten absorbierten Anteile auswirken, wobei eine Wellenlänge 7,9 µm und einer wellenlängen 3,4 µm beträgt.

2. Verfahren nach Anspruch 1, **dadurch gekennzeichnet, dass** außerdem der von dem Erdgas absorbierte Anteil der Infrarotstrahlung für eine weitere Wellenlänge im Bereich von 3,2 µm bis 3,5 µm erfasst wird.

3. Verfahren nach einem der Ansprüche 1 bis 2, **dadurch gekennzeichnet, dass** der von dem Erdgas absorbierte Anteil der Infrarotstrahlung bei Normbedingungen erfasst wird.

4. Verfahren nach einem der Ansprüche 1 bis 2, **dadurch gekennzeichnet, dass** die von dem Erdgas absorbierten Anteile der Infrarotstrahlung temperaturkompensiert und/oder druckkompensiert der Bestimmung des Brennwertes zugrundegelegt werden.

5. Verfahren nach einem der Ansprüche 1 bis 4, **dadurch gekennzeichnet, dass** im Schritt b) zusätzlich wenigstens eine der Messgrößen Druck, Temperatur und Kohlenstoffdioxidanteil des Erdgases erfasst wird.

6. Vorrichtung zur verbrennungslosen Bestimmung des Brennwertes oder der Wobbezahl eines Erdgases, mit einer an eine das Erdgas führende Gasleitung (1) anschließbaren Sensoranordnung (3) und einer mit der Sensoranordnung gekoppelten Auswerteeinheit (15) zur Bestimmung des Brennwertes oder der Wobbezahl,
wobei die Sensoranordnung (3) eine Strahlungsquelle (11) für Infrarotstrahlung und der Strahlungsquelle zugeordnete Mittel zur Erfassung des von dem Erdgas absorbierten Anteils der Infrarotstrahlung aufweist, wobei
die Mittel den von dem Erdgas absorbierten Anteil für zwei Wellenlängen oder spektrale Bereiche erfassen, und die beiden Wellenlängen oder spektralen Bereiche derart ausgewählt sind, dass sich die Anteile einzelner Komponenten des Erdgases in unterschiedlicher Gewichtung auf die erfassten absorbierten Anteile auswirken, wobei ein Mittel derart ausgebildet ist, dass es den absorbierten Anteil der Infrarotstrahlung für die Wellenlängen 7,9 µm und 3,4 µm erfasst.

7. Vorrichtung nach Anspruch 6, **dadurch gekennzeichnet, dass** die Mittel zur Erfassung des absorbierten Anteils der Infrarotstrahlung wenigstens zwei in Bezug auf die Strahlungsquelle nebeneinander angeordnete Filter (13) aufweisen, wobei die Filter unterschiedliche Wellenlängen oder spektrale Bereiche der Infrarotstrahlung durchlassen, und wobei die Mittel zur Erfassung des absorbierten Anteils der Infrarotstrahlung außerdem für jedes Filter einen in Bezug auf die Strahlungsquelle hinter dem Filter angeordneten Infrarotdetektor (12) aufweisen.

8. Vorrichtung nach Anspruch 7, **dadurch gekennzeichnet, dass** die Mittel zur Erfassung des absorbierten Anteils der Infrarotstrahlung derart ausgebildet sind, dass sie außerdem den von dem Erdgas absorbierten Anteil der Infrarotstrahlung für eine weitere Wellenlänge im Bereich von 3,2 µm bis 3,5 µm erfassen.

9. Vorrichtung nach einem der Ansprüche 6 bis 8, **dadurch gekennzeichnet, dass** die Mittel zur Erfassung des absorbierten Anteils der Infrarotstrahlung einen optischen Vergleichskanal aufweisen, der die Infrarotstrahlung in einem Wellenlängenbereich erfasst, in welchem die Erdgaskomponenten keine IR-Strahlung absorbieren.

10. Vorrichtung nach einem der Ansprüche 6 bis 9, **dadurch gekennzeichnet, dass** die Strahlungsquelle (11) und die Mittel zur Erfassung des absorbierten Anteils aufeinander ausgerichtet sind, und dass sich zwischen diesen eine Messkammer (7) mit dem zu bestimmenden Erdgas befindet.

11. Vorrichtung nach Anspruch 10 **dadurch gekennzeichnet, dass** die Messkammer (7) über einen Stichkanal (5) an die Gasleitung (1) anschließbar ist, und dass zwischen Gasleitung (1) und Messkammer (7) ein Gasfilter (10) angeordnet ist.

12. Vorrichtung nach Anspruch 11, **dadurch gekennzeichnet, dass** der zu der Messkammer führende Stichkanal (5) einen Zuströmkanal (8) sowie einen Abströmkanal (9) aufweist, und dass die Stichleitung derart an die Gasleitung anschließbar ist, dass der Zuströmkanal am stromauf gelegenen Ende in den Strömungsquerschnitt der Gasleitung (1) hineinragt.

## Claims

1. Method for determining without combustion the superior calorific value or Wobbe number of a natural gas, wherein
a) at least part of the natural gas is exposed to infrared radiation,
b) the proportion of the infrared radiation absorbed by the natural gas is recorded,
c) the superior calorific value or Wobbe number is determined from the values for the proportion absorbed by the natural gas,
d) several measurement cycles precede steps a) to c), in which steps a) and b) are carried out with several reference gases of known superior calorific value or Wobbe number; wherein, setting out from the relationship of the reference values recorded for the reference gases, a number of reference value patterns corresponding to the number of measurement cycles is stored for assignment to the known superior calorific values or Wobbe numbers; and wherein the measured values from a subsequent measurement cycle on natural gas of unknown superior calorific value or Wobbe number are compared with the reference value patterns for assignment to a specific superior calorific value or Wobbe number,
wherein the proportion absorbed by the natural gas is recorded for two wavelengths or spectral ranges, and the two wavelengths or spectral ranges are chosen so that the proportions of individual components of the natural gas affect the recorded absorbed proportions with different weighting, wherein one wavelength is 7.9 µm and the other wavelength is 3.4 µm.

2. Method according to claim 1, **characterised in that** the proportion of the infrared radiation absorbed by the natural gas is additionally recorded for another wavelength in the range from 3.2 µm to 3.5 µm.

3. Method according to any one of claims 1 to 2, **characterised in that** the proportion of the infrared radiation absorbed by the natural gas is recorded under normal conditions.

4. Method according to any one of claims 1 to 2, **characterised in that** the proportions of the infrared radiation absorbed by the natural gas are used with temperature compensation and/or pressure compensation as a basis for determining the superior calorific value.

5. Method according to any one of claims 1 to 4, **characterised in that** in step b) at least one of the measurands of pressure, temperature and carbon dioxide content of the natural gas is additionally recorded.

6. Device for determining without combustion the superior calorific value or Wobbe number of a natural gas, with a sensor arrangement (3) connectable to the gas line (1) carrying the natural gas and with an evaluation unit (15) coupled to the sensor arrangement to determine the superior calorific value or Wobbe number,
wherein the sensor arrangement (3) has a radiation source (11) for infrared radiation and means assigned to the radiation source for determining the proportion of the infrared radiation absorbed by the natural gas,
wherein the means record the proportion absorbed by the natural gas for two wavelengths or spectral ranges, and the two wavelengths or spectral ranges are chosen so that the proportions of individual components of the natural gas affect the recorded absorbed proportions with different weighting, one means being designed so that it records the absorbed proportion of the infrared radiation for the wavelengths of 7.9 µm and 3.4 µm.

7. Device according to claim 6, **characterised in that** the means for recording the absorbed proportion of the infrared radiation have at least two filters (13) arranged next to each other in relation to the radiation source, wherein the filters allow different wavelengths or spectral ranges of the infrared radiation to pass through, and wherein the means for recording the absorbed proportion of the infrared radiation also have for each filter an infrared detector (12) arranged behind the filter in relation to the radiation source.

8. Device according to claim 7, **characterised in that** the means for recording the absorbed proportion of the infrared radiation are designed so that they additionally record the proportion of the infrared radiation absorbed by the natural gas for another wavelength in the range from 3.2 µm to 3.5 µm.

9. Device according to any one of claims 6 to 8, **characterised in that** the means for recording the absorbed proportion of the infrared radiation have an optical reference duct which records the infrared radiation in a wavelength range in which the natural gas components do not absorb any infrared radiation.

10. Device according to any one of claims 6 to 9, **characterised in that** the radiation source (11) and the means for recording the absorbed proportion are mutually aligned, and **characterised in that** a measuring chamber (7) with the natural gas to be determined is located between them.

11. Device according to claim 10, **characterised in that** the measuring chamber (7) can be connected to the gas line (1) via a branch duct (5), and **characterised in that** a gas filter (10) is arranged between the gas line (1) and the measuring chamber (7).

12. Device according to claim 11, **characterised in that** the branch duct (5) leading to the measuring chamber has an inflow duct (8) and an outflow duct (9), and **characterised in that** the branch line can be connected to the gas line so that the inflow duct protrudes into the cross-flow section of the gas line (1) at the upstream end.

## Revendications

1. Procédé pour mesurer sans combustion le pouvoir calorifique supérieur ou l'indice de Wobbe d'un gaz naturel, où
a) au moins une partie du gaz naturel est exposée à une source de rayonnement infrarouge,
b) la part du rayonnement infrarouge absorbée par le gaz naturel est saisie,
c) le pouvoir calorifique supérieur ou l'indice de Wobbe est déterminé à partir des données pour la part du rayonnement infrarouge absorbée par le gaz naturel,
d) plusieurs cycles de mesure précèdent les pas a) à c) du procédé, où les pas a) et b) sont réalisés avec plusieurs gaz de référence dont le pouvoir calorifique supérieur ou l'indice de Wobbe est connu; où à partir du rapport des données de référence saisies pour les gaz de référence est mis en mémoire un nombre de modèles de données de référence, correspondant au nombre des cycles de mesure, par affectation aux pouvoirs calorifiques supérieurs ou aux indices de Wobbe connus; et où les données de mesure d'un cycle de mesure ultérieur pour un gaz naturel dont le pouvoir calorifique supérieur ou l'indice de Wobbe n'est pas connu sont comparées avec les modèles de données de référence pour l'affectation d'un pouvoir calorifique supérieur ou un indice de Wobbe déterminé,
où la part absorbée par le gaz naturel est saisie pour deux longueurs d'onde ou aires spectrales, et où les deux longueurs d'onde ou aires spectrales sont choisies de la sorte que les parts de différents composants du gaz naturel ont un impact, avec une pondération différente, sur les parts absorbées saisies, où une longueur d'onde est de 7,9 µm et une autre longueur d'onde est de 3,4 µm.

2. Procédé suivant la revendication 1, **caractérisé par le fait que** la part du rayonnement infrarouge absorbée par le gaz naturel et de plus saisie pour une autre longueur d'onde dans une fourchette de 3,2 µm à 3,5 µm.

3. Procédé suivant l'une des revendications 1 ou 2, **caractérisé par le fait que** la part du rayonnement infrarouge absorbée par le gaz naturel est saisie à des conditions normales.

4. Procédé suivant l'une des revendications 1 ou 2, **caractérisé par le fait que** les parts du rayonnement infrarouge absorbées par le gaz naturel sont prises comme base, compensées de température et/ou de pression, pour la détermination du pouvoir calorifique supérieur.

5. Procédé suivant l'une des revendications 1 à 4, **caractérisé par le fait que** dans le pas b) est saisie de plus au moins une des mesurandes telles que la pression, la température et la teneur en dioxyde de carbone du gaz naturel.

6. Dispositif pour mesurer sans combustion le pouvoir calorifique supérieur ou l'indice de Wobbe d'un gaz naturel, avec une disposition de capteurs (3), connectable à une conduite de gaz (1) transitant le gaz naturel, et une unité d'exploitation des données (15), couplée à la disposition des capteurs, pour déterminer le pouvoir calorifique supérieur ou l'indice de Wobbe,
où la disposition des capteurs (3) présente une source de rayonnement (11) pour le rayonnement infrarouge ainsi que des moyens, affectés à la source de rayonnement, pour la saisie de la part du rayonnement infrarouge absorbée par le gaz naturel,
où les moyens saisissent la part absorbée par le gaz naturel pour deux longueurs d'onde ou aires spectrales, et où les deux longueurs d'onde ou aires spectrales sont choisies de la sorte que les parts de différents composants du gaz naturel ont un impact, avec une pondération différente, sur les parts absorbées saisies,
où un moyen est conçu de la sorte qu'il puisse saisir la part du rayonnement infrarouge absorbée pour les longueurs d'onde de 7,9 µm et de 3,4 µm.

7. Dispositif suivant la revendication 6, **caractérisé par le fait que** les moyens pour saisir la part du rayonnement infrarouge absorbée présentent au moins deux filtres (13), disposés l'un à côté de l'autre par rapport à la source de rayonnement, où les filtres laissent passer des longueurs d'onde ou aires spectrales différentes du rayonnement infrarouge, et où les moyens pour saisir la part du rayonnement infrarouge absorbée présentent de plus, pour chacun des filtres, un capteur infrarouge (12) disposé en aval du filtre par rapport à la source de rayonnement.

8. Dispositif suivant la revendication 7, **caractérisé par le fait que** les moyens pour saisir la part du rayonnement infrarouge absorbée sont conçus de la sorte qu'ils saisissent de plus la part du rayonnement infrarouge absorbée par le gaz naturel pour une autre longueur d'onde dans une fourchette de 3,2 µm à 3,5 µm.

9. Dispositif suivant l'une des revendications 6 à 8, **caractérisé par le fait que** les moyens pour saisir la part du rayonnement infrarouge absorbée présentent un canal de comparaison optique, lequel saisit le rayonnement infrarouge dans une fourchette de longueurs d'onde, dans laquelle les composants du gaz naturel n'absorbent pas de rayonnement IR.

10. Dispositif suivant l'une des revendications 6 à 9, **caractérisé par le fait que** la source de rayonnement (11) et les moyens pour saisir la part du rayonnement infrarouge absorbée sont alignés l'une vers les autres, et qu'une chambre de mesurage (7) comportant le gaz naturel à analyser est disposée entre les deux.

11. Dispositif suivant la revendication 10, **caractérisé par le fait que** la chambre de mesurage (7) et connectable à la conduite de gaz (1) par une antenne (5), et qu'un filtre de gaz (10) est disposé entre la conduite de gaz (1) et la chambre de mesurage (7).

12. Dispositif suivant la revendication 11, **caractérisé par le fait que** l'antenne (5) menant à la chambre de mesurage présente un canal d'alimentation (8) et un canal d'évacuation (9), et que l'antenne est connectable à la conduite de gaz de la sorte que le canal d'alimentation fasse saillie, à l'extrémité amont, dans la section d'écoulement de la conduite de gaz (1).
